# EUROPEAN PATENT APPLICATION

(11) **EP 4 602 924 A1**
(43) Date of publication of application: **20.08.2025**
(21) Application number: 24157820.2
(22) Date of filing: 15.02.2024
(51) Int. Cl.: A23K 10/18, A23K 20/10, A23K 20/158, A23K 20/163, A23K 20/26, A23K 50/75

(54) **FEED ADDITIVE COMPOSITION FOR LIVESTOCK**

(71) Applicant: Gallicare GbR, 06366 Köthen (DE)
(72) Inventor: Todte, Matthias, Dr., 06366 Köthen (DE)
(74) Representative: Gille Hrabal Partnerschaftsgesellschaft mbB Patentanwälte

(57) **Abstract**

Disclosed herein is a feed additive composition suitable for supplementing the nutrition of livestock to improve the physical constitution and the health of livestock during growing by strengthening the microbiome of the livestock's digestive system.

## Description

### INTRODUCTION

Disclosed herein is a feed additive composition suitable for supplementing the nutrition of livestock to improve the physical constitution and the health of livestock during growing by strengthening the microbiome of the livestock's digestive system. The feed additive composition is suitable for the prevention and treatment of dysbacteria and resulting in lameness in young livestock, can be produced by a simple method, and administered to the livestock during regular feeding procedures.

### BACKGROUND OF THE INVENTION

Successful rearing of livestock on a large scale requires a keen eye on the fed animals' well-being, which is in a paramount part connected to their digestive tract. It is therefore apparent that diseases associated to an unstable intestinal microbiome and the overall quality of the applied animal feed may go hand in hand. Animals that are capable of utilizing their required nutrients in sufficient amounts and get the chance to develop a strong and balanced microbiome gain the most weight, convert feed better to body mass, stay healthy and are exposed to as little stress as possible.

Keeping large groups of animals together comes with a limitation on the available space. Such conditions naturally lead to an increased risk for outbursts of infections among the flock or herd. The risk for infections is especially prevalent during the early life stages of a livestock when the immune defense system and the digestive track of the animals is not fully developed yet. This can lead to cases in which microorganisms, that do not cause any infectious outbursts in fully grown animals with a stable immune system, can pose a serious risk for the health of the young livestock and in the further growing period.

For example, microbes of the genus Enterococcus (E.) are a commonly occurring species of the domain Bacteria known for their ability to produce lactic acid. This feature makes them valuable for the food industry, where they are e. g. utilized in the fermentation of cheeses. They naturally occur in the microbiome of the digestive system in animals as well as humans. Even E. species which are associated with diseases such as *E. cecorum* can be found under physiological conditions where they do not cause infections in healthy organisms.

However, there are cases where *E. cecorum* has been connected to problematic infectious outbursts in livestock. An increasing number of reports concerning young broilers that suffer from sudden paresis or lameness have emerged. Some of these animals may recover on their own, but others may show additional symptoms including brain damage or even death. It is generally assumed that these symptoms are caused by an infection with *E*. *cecorum,* transmitted from the digestive system of the parent flock via the eggshell surface. The protective cuticula naturally found on the eggshell can become damaged or even be missing altogether. This in turn can expose the not yet hatched broilers to *E. cecorum* before their digestive microbiome is stable enough to assimilate the Bacteria properly.

In the past, infections such as in the stated example have been treated with antibiotics, but there are a number of factors which call this approach into question. For one, the effect of the applied antibiotics is often only temporary, and reinfection occurs shortly after the medication is discontinued. Furthermore, many Bacteria which were predominantly treated in such a way have become resistant to usual antibiotics. Another factor which should not be underestimated is the growing concern in the population regarding animal products which are loaded with antibiotics.

Therefore, there is an ever increasing need to provide a measure to prevent and/ or deal with infectious diseases among young livestock that does not involve treatment with antibiotics.

### STATE OF THE ART

A number of approaches which involve feed additives dedicated to improving livestock health are known in the general state of the art.

The document US 2010/0233320 A1 concerns an animal feed kibble comprising a probiotic coating. Said kibble is intended for house animals such as dogs and cats and thus the actual kibble is protein based. However, the coating may be composed of compounds which further stimulate the animal's digestive capability by introducing plant-based nutrients, vitamins and probiotic Bacteria strains.

A liquid cysteamine hydrochloride composition is described in the application CN 101366452 A. The composition is provided to poultry to increase its weight gain and comprises a cysteamine hydrochloride derivative, β-cyclodextrine, emulsifiers, amino acids as well as a choice of vitamins and nutrients.

The application CN 102144727 A discloses a liquid functional vitamin premix comprising emulsifiers, fat- and water-soluble vitamins, carbohydrates and nutrients. The invention of CN 102144727 A is intended to be applied to chickens and increases weight gain and the egg to feed ratio.

A synbiotic composition for the use in the treatment, prevention, amelioration, or reduction of symptoms in patients suffering from inflammatory bowel disease or other infections is introduced in WO 2022/103321 A2. The nutritional supplement for the use described therein comprises at least two bacterial strains and one dietary fibre. The composition is intended to be used as a dietary supplement for humans.

The document WO 2022/081947 A1 describes a method for improving the bioefficacy of a protease-containing feed or diet via the utilization of a dedicated protease containing feed additive. Said additive comprises a finely milled soybean meal containing acid detergent fibers, a sulfur containing amino acid and has a low buffer capacity. The method involves feeding said additive to a bred livestock species.

WO 2021/034660 A1 discloses a feed additive composition comprising biologically pure strains of lactobacillus as well as strains with a modified RNA sequence. The feed additive composition serves to strengthen the immune response to infections of Clostridium perfringens in poultry.

A probiotic composition comprising two strains of *Lactobacillus reuteri,* wherein at least one of said strains is modified, is introduced in WO 2020/163398 A1. The probiotic composition is intended for the treatment of pathogenic Bacteria infections.

The application WO 98/24327 A1 concerns a process for increasing the health, livability, weight gain or feed conversion efficiency of poultry. Said process involves feeding the poultry a modified moist feed composition. Therein, a different composition is provided to address the set objectives of increasing health, livability, weight gain, or feed conversion efficacy. However, the application does not attempt to address multiple issues at once with a combined approach. The compositions may comprise coloring agents, carbohydrates, amino acids, emulsifiers, bacterial, yeast, or viral strains.

The contributions to the state of the art up until this point are mostly concerned with either introducing a beneficial bacterial species or providing a mixture of high energy nutrients to the livestock. However, so far no composition is available which strengthens the microbiome and also the feed conversion especially suited to livestock in its early life stages. Furthermore, none of the mentioned documents are concerned with the treatment of enterococcus-based infections.

### OBJECT OF THE INVENTION

The objective of the present invention was to provide an improved feed additive composition for life stock. The novel feed additive composition should be suitable for easily supplementing the nutrition of livestock. The novel feed additive composition should be able to improve the physical constitution and the health of livestock during growing or to improve the intestinal health and feed utilization of livestock in its early life stages. In a particular aspect, a novel feed additive composition should be made available, which may serve as a substitute for antibiotic treatment regimens. The novel feed additive composition should in particular be suitable for supplementing the nutrition of poultry, especially chicks, in poultry growing.

The inventors of the present invention surprisingly found that a feed additive composition comprising a combination of oligosaccharides, small organic acids or their esters as well as emulsifiers improves the cultivation conditions for obligate anaerobic Bacteria in the digestive system of livestock while simultaneously increasing the nutrient utilization in said livestock. As short-chained saccharides undergo fast resorption in the upper gastrointestinal tract of livestock, usually animal feed contain longer-chain saccharides to achieve sufficiently slow resorption. For example, in pig breeding short-chain saccharides are not suitable due to the fast resorption. The inventors of the present invention found that surprisingly oligosaccharides can provide a nutritional benefit when administered in the novel animal feed without the disadvantage of fast resorption, in particular when administered to early-life livestock, such as particularly to young chicks in the first days or 1 or 2 weeks after hatching. With the surprising suitability of oligosaccharides, the novel feed additives can benefit from better solubility, which allows to more easily formulate the components when manufacturing the novel feed additive. This further allows more freedom in the choice of the form of the formulation and providing the feed additive in liquid form, e.g. for administration via drinking water, becomes possible.

The thusly achieved combined beneficial effect on the livestock's health in its early life stages improves its immune response to infectious disease and leads to increased intestinal and common health in a similar manner as an antibiotic treatment regime without the disadvantages, side-effects and risks arising from antibiotic treatment. Furthermore, the feed conversion rate of the treated animals is in combination with better/ dryer litter and consequently better foot pad quality improved as well.

### BRIEF DESCRIPTION OF THE INVENTION

[1] A feed additive composition for livestock, comprising a combination of the following components:
   a) one or more food-safe oligosaccharides; and
   b) one or more food-safe organic acids and/or food-safe organic acid esters; and
   c) one or more emulsifiers.
[2] The feed additive composition for livestock according to [1], wherein one or more food-safe oligosaccharides are composed of linear or branched chains of 20 to 50 monosaccharides, preferably of 30 to 40 monosaccharides and are selected from mannan or fructans, preferably from fructans, more preferably from inulins.
[3] The feed additive composition for livestock according to [1] or [2], wherein at least one oligosaccharide is inulin, preferably inulin obtained from chicory.
[4] The feed additive composition for livestock according to [1] to [3], wherein one or more food-safe organic acids and/or food-safe organic acid esters are selected according to formula (I), 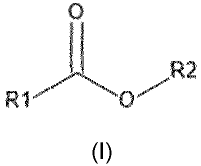
   wherein R¹ is a linear C₁-C₄ alkyl, and
   wherein R² is hydrogen, a linear or branched C₁-C₆ alkyl or any saturated or unsaturated fatty acid.
[5] The feed additive composition for livestock according to [1] to [4], wherein at least one food-safe organic acid ester is present, which is butyric acid ester.
[6] The feed additive composition for livestock according to [1] to [5], wherein emulsifiers are selected from lecithin, ascorbyl palmitate, glycerides, and mixtures thereof, preferably at least one emulsifier is lecithin.
[7] The feed additive composition for livestock according to [1] to [6], wherein the weight ratio of the portions a) : b) : c) in the composition is 0.5 to 1.5 : 1.0 to 2.0 : 0.5 to 1.5.
[8] The feed additive composition for livestock according to [1] to [7], further comprising one or more amino acids, including arginine, glutamine, glutamic acid, and mixtures thereof, preferred are arginine, glutamic acid and combinations thereof.
[9] The feed additive composition for livestock according to [1] to [8], further comprising one or more probiotics, wherein
   probiotics comprise one or more strains of the genus Bacillus, including: Bacillus subtilis, Bacillus lichiniformis, Bacillus amyloliquefaciens, Bacillus coagulans and mixtures thereof. Preferred are Bacillus subtilis and combinations containing Bacillus subtilis; and/or
   probiotics comprise one or more strains of the genus Bacteria, selected from one or more strains of Clostridium, including: Clostridium butyricum, Clostridium estertheticum, Clostridium pasteurianum, Clostridium putrefaciens, Clostridium sporogenes, Clostridium tyrobutyricum, and mixtures thereof, preferred is Clostridium butyricum.
[10] The feed additive composition for livestock according to [1] to [9], comprising
   a) one or more oligosaccharides; and
   b) one or more food-safe organic acids and/or food-safe organic acid esters; and
   c) one or more emulsifiers; and
   d) one or more amino acid; and
   e) one or more probiotics.
[11] The feed additive composition for livestock according to [1] to [10], comprising
   (i) Inulin, preferably inulin obtained from chicory; and
   (ii) butyric acid ester and/or formic acid; and
   (iii) lecithin; and
   (iv) arginine and/or glutamic acid; and
   (v) one or more probiotics selected from any Bacillus genus and Clostridium butyricum.
[12] The feed additive composition according to [1] to [10], further comprising a bile salt hydrolase inhibitor (BSH), including: KCI, riboflavin (vitamin B2), caffeic acid and mixtures thereof.
[13] The feed additive composition according to [12], wherein caffeic acid is provided in the form of extracted plant material, preferably from extracted coffee beans.
[14] The feed additive composition according to [12] or [13], comprising
   (i) one or more oligosaccharides; and
   (ii) one or more food-safe organic acids and/or food-safe organic acid esters; and
   (iii) one or more emulsifiers; and
   (iv) one or more amino acid; and
   (v) one or more bile salt hydrolase inhibitors.
[15] The feed additive composition according to [12] to [14], comprising
   (i) Inulin, preferably inulin obtained from chicory; and
   (ii) butyric acid ester and/or formic acid; and
   (iii) lecithin; and
   (iv) arginine and/or glutamic acid; and
   (v) one or more bile salt hydrolase inhibitors selected from KCI and/or riboflavin (vitamin B2).
[16] The feed additive composition according to [12] to [15], comprising
   (i) one or more oligosaccharides, preferably inulin, more preferably inulin obtained from chicory; and
   (ii) one or more food-safe organic acids and/or food-safe organic acid esters, preferably butyric acid ester and/or formic acid; and
   (iii) one or more emulsifiers, preferably lecithin; and
   (iv) one or more amino acid, preferably arginine and/or glutamic acid; and
   (v) one or more bile salt hydrolase inhibitors, preferably selected from KCI and/or riboflavin (vitamin B2; and
   (vi) one or more probiotics, preferably Clostridium butyricum.
[17] The feed additive composition for livestock according to [1] to [16], wherein the composition is in a liquid form, preferably in the form of an aqueous solution.
[18] The feed additive composition for livestock according to [1] to [16], wherein the composition is in a solid form.
[19] The feed additive composition for livestock according to [18], wherein butyric acid is added in an encapsulated form.
[20] A method for producing the feed additive composition according to [1] to [19], comprising the steps of:
   a) preparing a mixture of the one or more oligosaccharides, the one or more food-safe organic acids and/or food-safe organic acid esters, and the one or more emulsifiers;
   b) optionally admixing one or more of the additional components selected from
      - one or more amino acids;
      - one or more probiotics, preferably selected from any strain of Bacillus, and/or Clostridium; and
      - one or more bile salt hydrolase inhibitors.
[21] The method according to [20], wherein the components can independently be admixed with each other in solid form, in the form of an aqueous solution, or in the form of an aqueous dispersion or suspension.
[22] The use of the feed additive composition for livestock according to [1] to [19] for supplementing the nutrition of livestock by admixing the feed additive composition to the nutrition of livestock.
[23] The use according to [22] for supplementing the nutrition of livestock to improve the physical constitution and the health condition of livestock during growing.
[24] The use according to [22] and [23] for strengthening the microbiome of the digestive system of livestock.
[25] The use according to [22] to [24], for improving the feed utilization of livestock.
[26] The use according to [22] to [25], for improving the weight gain of livestock.
[27] The use according to [22] to [26], for improving litter quality and foot pad health.
[28] The use according to [22] to [27], for reducing the late mortality rate of livestock.
[29] The use of the feed additive composition according to [22] to [28], for the administration to livestock via the nutrition starting within 1 to 14 after livestock birth.
[30] The use of the feed additive composition according to [22] to [29], for daily administration to livestock via the nutrition over a period of 1 to 14 days, preferably of 5 to 12 days, even more preferably of more than 10 days.
[31] The use of the feed additive composition according to [22] to [30] for the administration to livestock via the nutrition, wherein the feed additive composition is administered by mixing it into the livestock's water or feed supply in regular feeding procedures.
[32] The use according to [22] to [31], wherein the livestock is selected from poultry, cattle, pigs, sheep, horses, goats and rabbits, preferably from poultry.
[33] The use according to [32], wherein the livestock is poultry, selected from chicken, turkey, goose, duck, fowl, quail, pigeon, pheasant, ostrich and emu, preferably chicken.
[34] The feed additive composition according to [1] to [19] for the use in the treatment and prevention of dysbacteriosis, lameness and/or paresis in livestock in its early life stages.
[35] The feed additive composition according to [1] to [19] for the use in the treatment and prevention of dysbacteriosis, lameness and paresis caused by infections with E. cecorum in livestock in its early life stages.
[36] The feed additive composition according to [1] to [19] for the use in the prevention of damaged footpads caused by increased pH-value diarrhoeas in connection with an underdeveloped fat digestion capability.

The Invention is described in more detailed in the following paragraphs.

### DETAILLED DESCRIPTION OF THE INVENTION

### I. Feed Additive Composition

The present invention concerns a feed additive composition for improving the growing of livestock. In the sense of the invention, growing of livestock means any form of breeding, keeping and/or farming a given livestock which involves an aspect of the livestock's life wherein they increase in size, weight or both.

The feed additive composition of the invention is especially suitable for facilitating the food utilization of livestock in its very early live stages. For achieving the best results, the feed additive composition of the invention shall be administered to the livestock early after birth, most preferably starting on the first day after birth. Therewith, surprisingly, remarkable improvements in the livestock's microbiome can be achieved and therewith the best possible feed can be provided to be optimally digested by the young livestock. The inventors of the present invention surprisingly found that with the feed additive compositions of the present invention the objects of the invention as described above can be solved. The feed additive composition comprises the following components:
a) one or more food-safe oligosaccharides; and
b) one or more food-safe organic acids and/or food-safe organic acid esters; and
c) one or more emulsifiers.

In the sense of the invention, the term "food-safe" is meant to be understood by its general meaning, i. e. referring to a substance that is safe to be added to food and fit for consumption. Particularly, the term comprises oligosaccharides, organic acids and organic acid esters suitable for the use in animal feeding, such as listed in governmental regulations, for example in the European and German "Futtermittelverordnung" (FuttMV), or classified as GRAS (generally recognized as safe) food substances by the FDA.

The term oligosaccharides in the sense of the present invention refers to polymerized chains of saccharides involving glycosidic bonds which exceed the length of disaccharides and which exhibit middle- to short chain lengths.

Oligosaccharides belong to the group of carbohydrates (sugars) that are buildup of several identical or different monosaccharides linked to each other by glycosidic bonds to form polysaccharides, which can be linear (unbranched) or branched. The distinction between oligosaccharides and polysaccharides is blurred, but oligosaccharides are usually assumed to be polysaccharides of shorter chain length, comprising at least three monosaccharide units. In the sense of the present invention the term "oligosaccharides" relates to sugars buildup of at least 3 and up to 100 identical or different monosaccharides linked to each other by glycosidic bonds and which can be linear (unbranched) or branched. Preferably, the oligosaccharides according to the present invention comprise between 20 to 50 monosaccharide units. This means they are composed of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 monosaccharide units, linked by glycosidic bonds and which may be linear or branched. More preferably, oligosaccharides according to the invention are composed of 30 to 40monosaccharide units, linked by glycosidic bonds and which may be linear or branched.

In the sense of the invention, monosaccharides mean monosaccharides comprising either a 5- or 6-membered ring. This means, the monosaccharide units according to the invention comprise Glucose, Fructose, Galactose, Mannose, Arabinose, Xylose, Allose, Gulose, Glucosamin, Rhamnose and Chinovose. The oligosaccharides of the invention preferably comprise monosaccharide units selected from Glucose, Fructose, Galactose and Mannose, especially preferred are Glucose and Fructose.

The inventors of the present invention have found that oligosaccharides of chain lengths in the described range are excellently suitable to be digested in shorter digestive tracts. Usually, oligosaccharides of greater length are preferred, because they offer a longer spread-out energy uptake during the digestion process in livestock with longer digestive tracts. In younger animals, especially poultry, the digestive tracts are shorter, which is why shorter chained oligosaccharides are preferred as they can be completely digested even in shorter digestive tracts. This, however, does not mean that the feed additive composition according to the invention cannot be fed to livestock with longer digestive tracts and improve health indicators in such livestock as well.

According to the invention, it was shown that especially fructans and mannan are suitable oligosaccharides that enable the desirable effects. Among the fructans, especially Inulin stands out as an excellent oligosaccharide for the feed additive composition. The oligosaccharides used in the feed additive compositions of the invention must be food safe and suitable for consumption. Naturally occurring oligosaccharides are preferred.

According to the present invention, it has been found that inulin turned out be particularly suitable and is thus a preferably selected oligosaccharide in the feed additive composition of the invention, more preferably inulin obtained from chicory is selected in the feed additive composition of the invention. Chicory is a commonly available vegetable and provides large amounts of oligosaccharides which turned out to exhibit particularly beneficial effects according to the present invention.

Some oligosaccharides may fulfill a role of a prebiotic compound. In the sense of the invention. The term prebiotic has to be understood as an ingredient in the feed additive composition which fosters growth and/or activity of beneficial microbes in the gut microbiome of the livestock that is fed the feed additive composition.

Next to the oligosaccharides a further important component of the feed additive composition according to the invention are food-safe organic acids or food-safe organic acid esters.

According to the invention, especially preferred food-safe organic acids or food-safe organic acid esters are selected according to formula (I), 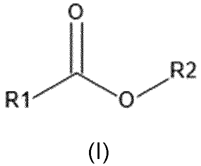
wherein R¹ is a linear C₁-C₄ alkyl, and
wherein R² is hydrogen, a linear or branched C₁-C₆ alkyl or any saturated or unsaturated fatty acid.

Such food-safe organic acids or food-safe organic acid esters help to establish an beneficial living environment for the microbiome in the digestive tract of the livestock. It is especially preferred to provide a food-safe organic acid ester. This is because such esters can be more easily be handled compared to the free acid, especially in the case of butyric acid which is known for its very unpleasant odor in the free acid form. As free butyric acid exhibits and extremely unpleasant odor, the use thereof in an encapsulated form may be preferred. In principle, generally available encapsulation techniques can be used, or commercially available food-safe encapsulated butyric acid may be used. For example, the butyric acid may be encapsulated in a digestible gel-matrix.

The food-safe organic acid or the food-safe organic acid ester may be considered as a postbiotic compound. In the sense of the invention, the term postbiotic relates to metabolic products or byproducts of live microbes. Even though the exact mechanism is not yet fully understood it has been shown that some metabolites of microbes can help to improve the living conditions of desired microbes in the gut microbiome. Some food-safe organic acids or food-safe organic acid esters are part of the metabolism of anaerobic microbes which exhibit desirable effects on the gut microbiome. The inventors of the present invention have found that the application of the food-safe organic acids or food-safe organic acid esters according to the invention help in achieving the desired effects of the feed additive composition on the livestock which is fed with it, such as improving the feed utilization, the weight gain and the overall health of the livestock.

A further very important component of the feed additive composition according to the invention are emulsifiers. Emulsifiers are especially helpful in supporting the digestive tract, especially the digestive tract of young livestock, in dealing with fats, which may be hard to digest, and which may lead to diarrhea, thus decreasing the food utilization and potentially ejecting non-digested nutrients early.

Generally, emulsifiers can be used which are "food-safe", as defined above, i.e. emulsifiers which are suitable for the use in animal feeding, including those listed in governmental regulations, for example in the European and German "Futtermittelverordnung" (FuttMV), or classified as GRAS (generally recognized as safe) food substances by the FDA.

Suitable emulsifiers in the sense of the invention can be selected from lecithin, ascorbyl palmitate, glycerides, and mixtures thereof, preferably at least one emulsifier is lecithin.

The necessary portions a) (oligosaccharides), b) (food-safe organic acids or food-safe organic acid esters), and c) (emulsifier) of the feed additive composition according to the invention is provided by admixing the said portions in a ratio of a) : b) : c) of about 0.5 to 1.5 : 1.0 to 2.0 : 0.5 to 1.5. This means that the compounds a) and c) are independently present in a ratio of about 0.5, 0.6, 0.7, 0.8, 0.9, 1.0, 1.1, 1.2, 1.3, 1.4 or 1.5 while the compound b) is present in a ratio of about 1.0, 1.1, 1.2, 1.3, 1.4, 1.5, 1.6, 1.7, 1.8, 1.9 or 2.0. The term "about" in the context of these measures means that an error of 0.05 is possible for each given value for each independent portion.

In addition to the afore mentioned components of the feed additive composition according to the invention, further compounds may be added to achieve various beneficial effects on the livestock grown with the help of the feed additive composition.

In one aspect, for example, one or more amino acids may be added to the feed additive composition. In principle, amino acids can be selected from those being generally used or suitable in animal feeding and nutrition. Preferred examples of amino acids for example include arginine, glutamine, glutamic acid, and mixtures thereof, preferred are arginine, glutamic acid and combinations thereof.

The amino acids offer an additional nutrient source in the feed additive composition and thus strengthen the livestock fed with the composition according to the invention.

According to the invention, a further component that can be added to the feed additive composition are probiotics. In the sense of the invention the term "probiotics" relates to live microorganisms that provide health benefits when consumed, generally by improving or restoring the gut microbiome. Probiotics are considered generally safe to consume. According to the invention, probiotics may be selected from one or more strains from the genii Bacillus or Bacteria. Especially preferred are Bacteria from the genus Clostridium butyricum.

Hatchlings naturally receive intestinal Bacteria from their mother hen. In nature this enables the offspring to prime the microbiome with Bacteria suitable for digestion of the main nutrients in the existing surroundings. In modern animal production systems, the donor flocks get different feeds than their offspring. The reason for this is that breeding stock has to be kept in lean breeding body conditions and the offspring is fed for fast and efficient growing regardless the reproductive capabilities.

Because of this the pseudo vertically transmitted microorganisms do not match the requirements for an optimal prime flora for the immature digestive system. Without interfering this process, the variability of the individual microbiomes will be too heterogenic, resulting in dysbacteriosis, suboptimal feed conversion, low uniformity, wet litter, higher heating costs and poor foot pad skin. The number of Bacteria in the intestinal track multiplies many times in the first stage of life. In this process one can easily guide the bacterial composition by feed specs, by antibiotics, by pre- and probiotics and organic acids.

Later on, when the microbiome has developed this is barely possible. Recent scientific publications have shown that the heterogenic starting conditions lead to heterogenic production results. Because of the complexity of the intestinal microbiome and the waste interactions in-between the gut microbes a more complex intervention is needed. The inventors have chosen a broad approach to control the early bacterial development by combining the components as defined herein, which have been found to be surprisingly beneficial. Preferred compositions of the invention my provide feed additive compositions, wherein pre- pro- and postbiotics are combined in a novel form.

In one instance of the invention, the feed additive composition for livestock comprises the following components:
a) one or more oligosaccharides; and
b) one or more food-safe organic acids and/or food-safe organic acid esters; and
c) one or more emulsifiers; and
d) one or more amino acid; and
e) one or more probiotics.

In a preferred embodiment of the invention, the feed additive composition for livestock comprises the following selection of the most preferable examples for the items a) to e) as follows:
(a) Inulin, preferably inulin obtained from chicory; and
(b) butyric acid ester and/or formic acid; and
(c) lecithin; and
(d) arginine and/or glutamic acid; and
(e) probiotics, preferably selected from any strain of Bacillus genus and Clostridium butyricum.

The feed additive composition comprising the mentioned components is excellently suited to strengthen the microbiome of livestock in its early life stages and improving its feed conversion capabilities. The particularly preferred feed additive composition comprises as the oligosaccharide inulin, e.g. from chicory, is a perfectly suitable energy source. The preferred food-safe organic acid ester is butyric acid ester, which in congruence with formic acid provides a beneficial environment for probiotics, especially for the preferred Clostridium butyricum, to thrive. The preferred emulsifier lecithin improves the digestibility of fats and the preferred amino acids arginine and/or glutamic acid complement the nutrient profile of the most preferred feed additive composition according to the invention.

In a further aspect of the invention, the feed additive composition of the invention comprises as a further component one or more bile salt hydrolase (BSH) inhibitors. While the exact mode of action is not yet fully understood, it has been shown that BSH inhibitors can beneficially affect the gut microbiome of livestock in a similar or even improved way compared to antibiotic growth promoters which were in the past applied for that matter.

Food producing animals are getting more and more feed sufficient. The more nutrients are passing the intestinal track the more bloated the digestive system gets. This overfeeding might result in a breakdown of the physiological digestion. A key role in modern animal husbandry is played the bile salt hydrolase (BSH) which will be commonly produced by gut Bacteria. The more of those Bacteria are present the more BSH will conjugate the bile and the less efficient fat can be digested. This undigested fat disturbs the cecal microbiome and the physiological hypoxia breaks down. Obligate anaerobic Bacteria become less abundant and facultative anaerobic Bacteria overgrow the cecal ingesta. Lactic acid and gram-negative Bacteria deteriorate the intestinal wall and Bacteria can translocate in the systemic blood system. The Septicemia causes different symptoms when those Bacteria settle down in different organs like joins, bones and connecting tissues.

This may lead to a decreased capability of digesting fat, which in turn may lead to diarrhea in the livestock. Typically, a short time after birth of the livestock feeding with a higher fat nutrition becomes relevant. If the microbiome at this point has not developed in a desired way diarrhea in the livestock will occur at alarming rates. This can lead to further complications. One example for further complications is the accumulation of high pH diarrhea in the ground litter. The badly digested fat-rich nutrition can cause unusually high amounts of ammonia content in the livestocks excrement which is ejected into the ground litter. If the concentration therein becomes too high, the livestock's feet may be damaged.

The inventors of the present invention have surprisingly found that feed additive compositions as defined herein, which comprise bile salt hydrolase (BSH) inhibitors as an additional ingredient not only increase the feed utilization rate of fat-rich nutrition but also reduce the damaging of the footpads of livestock, thus showing the improvement of the digestive capabilities.

Additionally, the inventors of the present invention surprisingly found that livestock, once treated with the feed additive composition according to the invention, kept the beneficial effects achieved by the supplemented diet, even after said diet was discontinued. In comparison to treatment with antibiotic growth promoters this is a clear advantage.

However, the inventors of the present invention have also surprisingly found that a mixture of probiotics and bile salt hydrolase (BSH) inhibitors as additional components in the feed additive composition may improve the desired effects of the feed additive composition according to the invention, comprising the increased feed-utilization rate, weight gain and improvement of general health in the flock, herd etc.. Potentially, this effect can be even more pronounced than when a feed additive composition comprising BSH inhibitors without any probiotics is administered.

Therefore, in one variant of the feed additive composition according to the invention which is directed at fat-rich nutrition for livestock, one aim is to suppress unwanted effects of bile salt hydrolase (BSH). In said variant, one or more BSH inhibitors are added to the feed additive composition for livestock. Examples for one or more BSH inhibitors that are selected for the invention include KCI, riboflavin (vitamin B2), caffeic acid, and mixtures thereof. The inventors of the present invention found that these BSH inhibitors achieve the wanted effect in the livestock, while causing no adverse reactions.

In one specific instance of the invention, when caffeic acid is desired as the bile salt hydrolase (BSH) inhibitor, it is possible to provide the caffeic acid from extracts of plants containing said substance. This may be done by boiling plant material in hot water and skimming off the foamy solid dispersions from the broth surface. For example, the coffee grounds of green coffee beans can be utilized to obtain a caffeic acid enriched fraction in the described manner. Said fraction can easily be applied as an ingredient in the feed additive composition without the need of further purification. This method enables a cheap and easily available source of caffeic acid as an ingredient for the feed additive composition according to the invention.

Thus, a further aspect of the invention relates to a feed additive composition for livestock, which comprises the following components:
(i) one or more oligosaccharides; and
(ii) one or more food-safe organic acids and/or food-safe organic acid esters; and
(iii) one or more emulsifiers; and
(iv) one or more amino acids; and
(v) one or more bile salt hydrolase inhibitors.

Regarding the components (i) to (iv) reference is made to the definitions above.

Particularly preferred embodiments of such feed additive compositions for livestock according to this second aspect of the invention comprise the following preferred components:
(i) Inulin, preferably inulin obtained from chicory; and
(ii) butyric acid ester and/or formic acid; and
(iii) lecithin; and
(iv) arginine and/or glutamic acid; and
(v) one or more bile salt hydrolase inhibitors selected from KCI and/or riboflavin (vitamin B2).

A further aspect of the invention relates to a feed additive composition for livestock, which comprises the following components:
(i) one or more oligosaccharides; and
(ii) one or more food-safe organic acids and/or food-safe organic acid esters; and
(iii) one or more emulsifiers; and
(iv) one or more amino acids; and
(v) one or more bile salt hydrolase inhibitors; and
(vi) one or more probiotics.

Particularly preferred embodiments of such feed additive compositions for livestock according to this third aspect of the invention comprise the following preferred components:
(i) Inulin, preferably inulin obtained from chicory; and
(ii) butyric acid ester and/or formic acid; and
(iii) lecithin; and
(iv) arginine and/or glutamic acid; and
(v) one or more bile salt hydrolase inhibitors selected from KCI and/or riboflavin (vitamin B2); and
(vi) the probiotic Clostridium butyricum.

In the sense of the invention, the feed additive compositions as described herein may be in a liquid form, especially in the form of an aqueous solution. The various compounds can advantageously all be dissolved in water. Usually, polysaccharides exhibit poor water solubility, whereas oligosaccharides, especially shorter oligosaccharides such as the ones preferable for the present invention, can be easily dissolved in water. Furthermore, the food-safe organic acids or food-safe organic acid esters according to the invention can be easily dissolved in water, especially the preferred species according to formula (I). The emulsifiers, amino acids, probiotics and/or inhibitors can be easily dissolved in water as well. This offers the possibility of easy administration to the livestock via the water supply. A solution provides an optimal statistic distribution of all compounds therein, thus enabling the most efficient uptake. A feed additive composition of the invention in liquid form can be provided as a concentrate and then easily diluted in drinking water before administering to the livestock, which make the handling and processing for farmers easy.

However, the feed additive composition may also be provided in a solid form and in such cases can be fed to the livestock with its regular feed. This approach may be beneficial in cases, where compounds that are not easily handleable, such as free butyric acid, are provided to the livestock. If butyric acid shall be added to a feed additive composition in solid form, it is beneficial to use encapsulated butyric acid, as free butyric acid is liquid. In such a way, all chosen components of the feed additive composition according to the invention can be handled in a solid form as well.

Therefore, the feed additive composition according to the present invention is able to provide livestock with an excellently digestible energy source, a beneficial influence on the microbiomes living conditions for desired probiotic microbes and measures to deal with heavily digestible compounds.

The most surprising achievement of the feed additive composition according to the invention is that in all side-by side comparison the non-antibiotic invention outperformed the antibiotic approach regarding factors like animal weight gain, mortality or health improvements. The explanation for this astonishing effect is that hatchlings in modern poultry production are not constantly primed with the right intestinal flora to digest the offered broiler feed. By using antibiotics, the number of the remaining Bacteria derived by pseudo-vertical transmission from the hen will be just reduced but if the right microbes are not present the effect becomes questionable. The invented combination overcomes this dilemma by adding the specifically needed intestinal flora with supporting substances for an optimal intestinal development in an early stage of life. The close co- evolution of the gut and the microbiome takes mainly place in the first days of life. All effects of those early interventions in this phase are crucial for the further development and determine the intestinal and common health with all biological and economic consequences.

### II. Method for Producing the Feed Additive Composition

The feed additive composition for livestock according to the invention may be prepared by admixing the chosen components in the desired portions. The following steps may be carried out:
Preparing a mixture of
   - the one or more oligosaccharides,
   - the one or more food-safe organic acids and/or food-safe organic acid esters, and
   - the one or more emulsifiers.
Depending on the desired supplementation, one or more of the additional components as defined herein may be admixed to the mixture of oligosaccharide(s), food-safe organic acid(s) and/or organic acid ester(s) and emulsifier(s). Then, the following steps are carried out:
   a) preparing a mixture of the one or more oligosaccharides, the one or more food-safe organic acids and/or food-safe organic acid esters, and the one or more emulsifiers;
   b) admixing one or more of the additional components selected from
      - one or more amino acids, and
      - one or more probiotics, preferably selected from strains of Bacillus, and/or Clostridium.
However, according to the invention it is furthermore possible to focus more strongly on negative effects associated with bile salt hydrolase in livestock, that is fed a more fat-rich nutrition. Therefore, the feed additive composition may be prepared as follows:
   a) preparing a mixture of the one or more oligosaccharides, the one or more food-safe organic acids and/or food-safe organic acid esters, and the one or more emulsifiers;
   b) admixing one or more of the additional components selected from
      - one or more amino acids, and
      - one or more bile salt hydrolase inhibitors, and
      - one or more probiotics.

Depending on whether a liquid or solid feed additive composition shall be prepared, the selected components for the feed additive composition for livestock according to the invention are provided and admixed in a liquid or in a solid form.

If the feed additive composition for livestock according to the invention shall be provided in a liquid form, preferably in the form of an aqueous solution, all chosen components can independently of each other be added to the livestock's water supply or admixed before being added to the water supply. Preferably, a liquid premix, e.g. in the form of a concentrate is prepared and provided for admixing and diluting in drinking water.

If the feed additive composition for livestock according to the invention shall be provided in a solid form, all chosen components can independently of each other be added to the livestock's feed supply or admixed before being added to the feed supply. Preferably, a solid premix, e.g. in the form of a concentrate as a powder, particulate or granule mixture is prepared and provided for admixing with the normal animal feeding.

The feed composition for livestock is therefore easily produced and the livestock growing facilities and does not require additional equipment. It is thus easy to handle, can be dosed easily and individually and quickly provided ready for use.

### III. Uses of the Feed Additive Composition

On the foremost level, the feed additive composition for livestock of the invention serves to supplement the livestock feed with specifically selected and combined additional nutrients. As previously mentioned, the choice of components in the additive composition of the invention provides excellently digestible nutrient sources to livestock, especially young livestock in its early live stages, and furthermore promotes the development of a healthy microbiome in such animals. The presence of a healthy microbiome increases the digestive capability of the livestock and thus naturally enhances the nutrient uptake. With the specific selection and combination of nutrients, the feed additive composition of the invention surprisingly allows to achieve the beneficial effects described herein.

These beneficial effects can be achieved by feeding the feed additive composition of the invention, comprising a food-safe oligosaccharide, a food-safe organic acid or a food-safe organic acid ester and an emulsifier to enhance the fat digestion capabilities. These components may act as prebiotic and/or as postbiotic components. Furthermore, amino acids generally increase the nutrient profile of the feed additive composition. The further compounds such as probiotics, bile salt hydrolase (BSH) inhibitors or mixtures thereof realize the improved feed utilization and therewith weight gain as well as overall flock or herd etc. well-being. The content of these ingredients is adjusted based on the fat content of the provided nutrition or feed and the age of the livestock.

This is especially beneficial and desirable when growing livestock on a large scale. The improved physical constitution due to an improved nutrient uptake and stronger microbiome of the specimen decrease the potential spread of diseases and thus increases the overall health of the livestock flock, herd, etc. for example by reducing soiled ground litter with high ph-value excrements through the improvement of the feed digestion and decreased diarrheas.

A focal point of the feed additive composition for livestock according to the invention is the improvement of the livestock's microbiome. The feed additive compositions according to the invention allow to focus on different aspects to improve the living conditions for microbes in the microbiome environment of the digestive tract of livestock that is grown. The food-safe oligosaccharides according to the invention not only provide energy to livestock with shorter digestive tracts but also serve as an optimal culture medium for the desired microbiome. The food-safe organic acids or food-safe organic acid esters provide metabolites of beneficial obligate anaerobic microbes and may provide the anaerobic environment many benevolent microbes need to thrive. Furthermore, probiotics may be directly added to the feed additive composition according to the invention, thus establishing colonies of the desired species in the livestock's gut microbiome. The addition of choice probiotics can help to provide the microbiome with important microbes which increase the livestock's resistance to the spread of disease.

In cases wherein the young livestock is fed with fat-richer feeds it may be appropriate to add bile salt hydrolase (BSH) inhibitors instead of probiotics to reduce the influence of high amounts of BSH which may lead to decreased capability to digest fat and therefore lead to damaging diarrheas with high pH-values.

In certain cases, it may even be desirable to combine both the BSH inhibitor and a probiotic which may help to stabilize the digestive capabilities on the one hand and strengthen the resistance of the microbiome against damaging infections on the other hand.

By offering a high nutrient supply, increasing infection resistance, and strengthening the digestive capabilities of the livestock the feed additive composition according to the invention can be used to improve the feed utilization and weight gain of the livestock. In the sense of the invention, feed utilization describes the capability of the livestock to properly digest its feed and therefore absorb as high an amount of nutrients as possible. This can for example be measured in reduced mean feed costs per kg of grown livestock.

Therefore, the improved feed utilization is equivalent to improvements in weight gain, i. e., more weight is gained by the livestock per kg feed which is fed to the livestock.

A further decisive advantage of the feed additive composition according to the invention is the improved health in the flock or herd etc. of the livestock. For example, in poultry flocks improvements in health can be directly observed by improvements in the footpad health of the animals. Said animals are fed an increased fat diet, usually starting once the livestock has survived the first days after its birth and weight gain goals are targeted. This may start for example 14 days after its birth, and the livestock needs to be capable to digest a higher fat nutrition supply from this point on. However, due to an underdeveloped microbiome with a low microbe diversity with mostly microbes that produce bile salt hydrolase (BSH), the fat digestion can be disturbed. Such disturbances lead to livestock excrements with an increased pH-value in the excrement which is ejected in the form of diarrhea. Once said high pH-value diarrheas accumulate in the ground litter, the footpads of the livestock can be damaged due to the caustic environment. Therefore, the feed additive composition according to the invention does not only increase the livestocks health through a strong and infection resistant gut microbiome but also by improving the living conditions of the livestock by the described approach.

These improvements in the animal health additionally lead to a reduced late mortality rate of the livestock. In the sense of the invention, this means that more of the grown livestock reach the desired life stage.

According to the invention, the use of the feed additive composition for livestock is best started in the very early life stages. The best effects can be achieved when starting directly after birth, i. e. on the first day of nutrition after birth. One essential goal of growing livestock with the help of the feed additive composition is to achieve a homogenous microbiome over the whole flock, herd etc.. Therefore, it is important to start feeding the feed additive composition for livestock early, so that the microbiome of the younglings may develop uniformly right from the start. A homogenous microbiome over the whole flock, herd etc. enables equivalent resistances in all animals. This means, that the risk of spreading diseases is decreased even if a single specimen becomes infected, because all other specimen have increased resistive capabilities.

However, when the livestock's diet is changed at a later stage of the growing, e. g. 14 days after livestock birth, it may be changed to a higher fat diet to increase weight gain. AT this point at may become desirable to support the fat digestion capabilities in the livestock. The feed additive composition for livestock according to the invention comprising bile salt hydrolase (BSH) inhibitors or mixtures of BSH inhibitors and probiotics is best started to be fed at this point in time.

Improving the microbiome with the feed additive composition for livestock in the intended way requires regular feeding of the animals over a given period of time. The livestock should be fed with the feed additive composition for 1 to 14 day. This means that the livestock should receive the feed additive composition for livestock with their regular feed or water supply for a period of 1 d, 2 d, 3 d, 4 d, 5 d, 6 d, 7 d, 8 d, 9 d, 10 d, 11 d, 12 d, 13 d or 14 d. Preferably, the feed additive composition for livestock is fed for 5 to 12 days, even more preferably for more than 10 days.

In principle, the feed additive composition according to the invention can be fed to any kind of livestock that may be grown in any kind of farming facility. For example, the feed additive composition may be fed to poultry, cattle, pigs, sheep, horses, goats and rabbits. However, due to the choice of oligosaccharide preferable for the feed additive composition, the best results can be achieved for poultry. Poultry usually has a shorter digestive tract compared to commonly farmed mammal species. As laid out above, the choice of the preferred oligosaccharide is such that it is best absorbed in shorter digestive tracts. However, this does not mean that the feed additive composition cannot be applied to mammal livestock as well. The other ingredients such as food safe organic acids or food-safe organic acid esters, the emulsifiers, the amino acids, the probiotics of the bile salt hydrolase (BSH) inhibitors show their desired efficacy and mammalian livestock in the same way as in poultry.

When the feed additive composition according to the invention is provided to poultry, it can be fed to all kinds of poultry which may be grown in a farming environment. For example, the feed additive composition for livestock can be fed to grown chickens, turkeys, geese, ducks, fowls, quails, pigeons, pheasants, ostriches, an emus.

Specifically, the feed additive composition in the sense of the invention can be excellently utilized for the treatment and prevention of dysbacteriosis, lameness and paresis that can be caused by infectious diseases spread in breeding facilities where flocks, herds etc. develop a heterogenous microbiome and therefore and incomplete resistance profile to commonly occurring infectious diseases.

In the worst cases, dysbacteriosis causes neurological defects in the young livestock, such as for example a permanent lameness, or a paresis, but may even lead to a premature death of the animal. The spread of these diseases becomes easier in flocks, herds etc. where the microbiome of the livestock is heterogenous, and thus more animals may only be capable of an underdeveloped response to the exposure to common microbes such as E. cecorum.

Therefore, the feed additive composition according to the invention is excellently suited to be fed to early livestock in its early life stages to prevent dysbacteriosis, lameness and paresis caused by infections with E. cecorum.

According to the invention, the feed additive composition comprising bile salt hydrolase (BSH) inhibitors or mixtures of BSH inhibitors and probiotics can help in the prevention of footpad damages in livestock when application of a fat enriched diet has started. Through the improved fat digestion capabilities, the livestock is less prone to eject high pH-value excrements which can accumulate in the ground litter and provide a caustic environment that damages the animals' feet. The excretion of the livestock is normalized by the feed additive composition according to the invention and thus the damage to the animals' feet is prevented.

The health of the footpads is regularly evaluated using the footpad score system. Therein, the feet of the animals obtain a base score of either 0 (no visible damages), 1 (some swellings, no or mild ulcerations or lesions, discolorations over parts of the animals feet), 2a (swellings, ulcerations or lesions, discolorations over large parts of the animals feet) or 2b (severe swellings, ulcerations or lesions, strong discolorations over large parts of the animals feet). Next, it is evaluated how many animals out of 100 specimen of a given flock are afflicated with which score. After these evaluations, the amount of animals with a score of 0 is multiplied by 0, the amount of animals with a score of 1 is multiplied by 0.5, the amount of animals with a score of 2a is multiplied by 1 and the amount of animals with a score of 2b is multiplied by 2. The results are summarized and obviously lower scores are equal to healthier feet.

### DESCRIPTION OF THE FIGURES

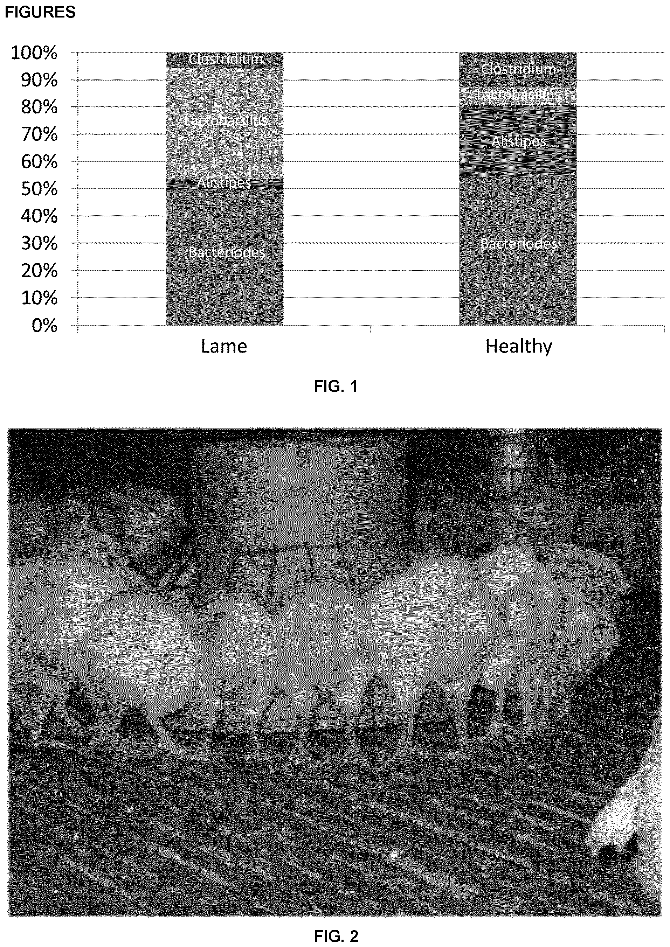

- **Figure 1**: Microbiome composition of broilers, taken from appendix. In a), the microbiome composition of a specimen suffering from lameness is shown. The microbiome composition of a healthy specimen is provided in b). The Figure highlights the importance of a larger amount of Clostridium microbes in a healthy broiler.
- **Figure 2**: Rears of a healthy broiler flock treated with the feed additive composition according to the invention are shown. The animals have a full plumage, no lesions or redness in the back region are visible, indicating a healthy excretion.

### EXAMPLES

### I. Feed conversion efficiency and weight gain: effects of different ingredients of the feed additive composition

Broiler chickens were supplied as day-old chicks from the same hatchery and reared on one fattening farm in Germany with enterococcal spondylitis history in four chicken houses (-40,000 birds each) for about five weeks (37 to 38 days). One identical conventional complete diet was offered *ad libitum* in all chicken houses. Chickens in each chicken house were treated either with Lincomycin/Spectinomycin (Lincospectin^{®}Pulver, Zoetis Deutschland GmbH, Berlin, Germany, 250 g/1000 L) or one of three different additives administered via drinking water during the first days of life. Chickens in the first chicken house were treated with lincomycin at the first day of life up to the age of two days (three days in total). At the first day of life up to the age of three days (four days in total), water soluble esterified butyrins were administered to the chickens in the second chicken house (0.12-0.24 mL/kg body weight). Over the same period, the chickens in the third chicken house were offered drinking water containing *Bacillus licheniformis* (70 g/1000 L), while palm oil (2 L/1000 L) was given to the chickens in the fourth chicken house during the first seven days of life. Table 1 provides an overview on the average body weights (g) measured at slaughterhouses at the respective days of life.

**Table 1. Broiler weight (g) at slaughterhouses. The number of broilers per batch is shown as "n".**

| **Day of Life** | **Chicken House 1** | **Chicken House 2** | **Chicken House 3** | **Chicken House 4** |
|---|---|---|---|---|
| 28 | 1538 g (n = 7285) | 1559 g (n = 7113) | 1457 (n = 7025) | |
| 33 | 1977 g (n = 4968) | 1984 g (n = 4954) | 1920 (n = 5006) | 1902 (n = 8255) |
| 37 | 2350 g (n = 25025) | 2424 g (n = 23854) | | |
| 38 | | | 2444 (n = 24677) | 2467 (n = 28224) |

| | | | | |
|---|---|---|---|---|
| **Breeder performance objectives:** 1501 g/ day 28; 1956 g/ day 33; 2334g/ day 37; 2429g/ day 38. | | | | |

### II. Feed conversion efficiency and weight gain: Total Body Weight, feed conversion rate and effects on breeder profit

In a further study four stables containing 40000 broilers each were treated under different growing conditions for the animals and the broilers were examined at day 29 as well as day 40 of their respective lives.

Stable 1 was used as a control and the animals were grown without any additives or medicines provided to their regular feed. Regular feed, however, was provided in continuous intervals and the animals always had drinking water at their disposal.

In stable 2, the animals were supplied with a mixture of oligosaccharides, butyric acid ester, Clostridium butyricum and Bacillus subtilis in their water supply. Otherwise they were fed regularly, same as in stable 1.

The conditions for stable 3 were the same as in stable 2, except that instead of Clostridium butyricum, the animals were provided with Lactobacillus plantarum.

Stable 4 broilers were grown with a conventional therapeutic approach involving the antibiotics lincomycin and spectinomycin provided through the drinking water.

All respective additive compositions were provided for the first three consecutive days of life, 250 g per 1000! of water each.

Table 2 shows the body weights of the animals at day 29 and day 40, the feed conversion rate (FCR) calculated for the broilers in the investigated time frame, feed cost in € per kg of life body mass and the breeder profit compared to the control group.

The feed conversion rate was calculated by dividing the average consumed feed in kg per animal by the average weight gain in kg per animal during the investigated time frame. The profit margin was calculated by adjusting the feed conversion rate with the feed cost per kg and extrapolating that value to the cost for the feed of a stable containing 40000 animals in the investigated time frame.

**Table 2. Average broiler weight on days 29 and 40 of their lives, the feed conversion rate (FCR) the cost per kg of feed in € and the calculated profit.**

| | **29 days alive** | **40 days alive** | | | |
|---|---|---|---|---|---|
| **Stable** | **Weight (g)** | **Weight (g)** | **FCR** | **Feed cost (€/kg)** | **Profit (€)** |
| 1 | 1735 | 2915 | 1.514 | 0.793 | 0 |
| 2 | 1682 | 2996 | 1.447 | 0.758 | 8546.57 |
| 3 | 1774 | 2854 | 1.512 | 0.792 | 3283.14 |
| 4 | 1753 | 2908 | 1.517 | 0.794 | -117.01 |

### III. Mortality, Weight Parameters and Footpad health

In a further study, three flocks comprising 40000 hatchlings which were 35 days old were kept in separate stables. The hatchlings were provided with a fat-enriched nutrition ad libitum day and had water at their disposable.

In Stable 1 and 2 lincomycin was added to the water supply in a concentration of 500 g/l for the first 3 consecutive days.

In Stable 3, at 19 days a combination of caffeic acid extract, butyric ester, KCL, oligosaccharides, organic acid and Arginine were given for 3 consecutive days in a concentration of 1 I of the liquid feed additive composition per 1000 I water.

The results of the third study are shown in Table 3.

**Table 3. Broiler mortality rate, daily weight gain, final weight and footpad score on day 35 of the animals lives is provided.**

| **Stable** | **Age (d)** | **Total mortality rate (%)** | **Daily weight gain (g)** | **Final weight (g)** | **Footpad score** |
|---|---|---|---|---|---|
| 1 | 35 | 3.18 | 64.03 | 2248 | 89 |
| 2 | 35 | 4.61 | 61.03 | 2145 | 172 |
| 3 | 35 | 2.98 | 65.15 | 2291 | 33 |

All animals were regularly fed ad libitum and house 1 and 2 were provided with lincomycin for 3 days and the feed additive composition in house 3 for 10 days. At the end of said period, the feet of all animals were investigated to determine their footpad score and all animals were weighed. Table 3 shows the results of the study.

## Claims

1. A feed additive composition for livestock, comprising a combination of the following components:
a) one or more food-safe oligosaccharides; and
b) one or more food-safe organic acids and/or food-safe organic acid esters; and
c) one or more emulsifiers.

2. The feed additive composition for livestock according to claim 1, wherein
a) the food-safe oligosaccharides are composed of linear or branched chains of 20 to 50 monosaccharides, preferably of 30 to 40 monosaccharides and are selected from mannan or fructans, preferably from fructans, more preferably from inulins; and
b) wherein one or more food-safe organic acids and/or food-safe organic acid esters are selected according to formula (I), 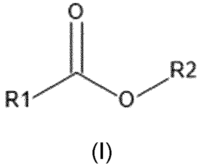
wherein R¹ is a linear C₁-C₄ alkyl, and
wherein R² is hydrogen, a linear or branched C₁-C₆ alkyl or any saturated or unsaturated fatty acid; and
c) wherein emulsifiers are selected from lecithin, ascorbyl palmitate, glycerides, and mixtures thereof, preferably at least one emulsifier is lecithin.

3. The feed additive composition for livestock according to claim 1 or 2, wherein at least one food-safe organic acid ester is present, which is a butyric acid ester.

4. The feed additive composition for livestock according to claim 1 to 3, wherein the weight ratio of the portions a) : b) : c) in the composition is 0.5 to 1.5 : 1.0 to 2.0 : 0.5 to 1.5.

5. The feed additive composition for livestock according to claim 1 to 4, further comprising one or more amino acids, including arginine, glutamine, glutamic acid, and mixtures thereof, preferred are arginine, glutamic acid and combinations thereof.

6. The feed additive composition for livestock according to claim 1 to 5, further comprising one or more probiotics, wherein
probiotics comprise one or more strains of the genus Bacillus, including: Bacillus subtilis, Bacillus lichiniformis, Bacillus amyloliquefaciens, Bacillus coagulans and mixtures thereof. Preferred are Bacillus subtilis and combinations containing Bacillus subtilis; and/or
probiotics comprise one or more strains of the genus Bacteria, selected from one or more strains of Clostridium, including: Clostridium butyricum, Clostridium estertheticum, Clostridium pasteurianum, Clostridium putrefaciens, Clostridium sporogenes, Clostridium tyrobutyricum, and mixtures thereof, preferred is Clostridium butyricum.

7. The feed additive composition for livestock according to claim 1 to 6, comprising
a) one or more oligosaccharides; and
b) one or more food-safe organic acids and/or food-safe organic acid esters; and
c) one or more emulsifiers; and
d) one or more amino acid; and
e) one or more probiotics.

8. The feed additive composition according to claim 1 to 6, further comprising a bile salt hydrolase inhibitor (BSH), including: KCI, riboflavin (vitamin B2), caffeic acid, and mixtures thereof.

9. The feed additive composition for livestock according to claim 8, comprising
(i) one or more oligosaccharides; and
(ii) one or more food-safe organic acids and/or food-safe organic acid esters; and
(iii) one or more emulsifiers; and
(iv) one or more amino acid; and
(v) one or more bile salt hydrolase inhibitors; and
(vi) optionally one or more probiotics.

10. The feed additive composition for livestock according to claim 1 to 9, wherein the composition is in a liquid form or in a solid form, preferably in liquid form, even more preferably in the form of an aqueous solution.

11. A method for producing the feed additive composition according to claim 1 to 10, comprising the steps of:
a) preparing a mixture of the one or more oligosaccharides, the one or more food-safe organic acids and/or food-safe organic acid esters, and the one or more emulsifiers; and
b) optionally admixing one or more of the additional components selected from
• one or more amino acids,
• one or more probiotics;
• one or more bile salt hydrolase inhibitors; and
• one or more probiotics.

12. The use of the feed additive composition for livestock according to claim 1 to 10 for supplementing the nutrition of livestock by admixing the feed additive composition to the nutrition of livestock for strengthening the microbiome of the digestive system of livestock, for improving the feed utilization of livestock, for improving the weight gain of livestock, for improving litter quality and foot pad health of the livestock and/or for reducing the late mortality rate of livestock.

13. The use according to claim 12 wherein the feed additive composition for livestock is first administered within 24 h after livestock birth and administered daily via the nutrition over a period of 1 to 14 days, preferably of 2 to 8 days, even more preferably of 3 to 7 days.

14. The use according to claim 12 or 13 wherein the livestock is selected from poultry, cattle, pigs, sheep, horses, goats and rabbits, preferably from poultry and wherein the poultry is selected from chicken, turkey, goose, duck, fowl, quail, pigeon, pheasant, ostrich and emu, preferably chicken.

15. The feed additive composition according to claim 1 to 10 for the use in the treatment and prevention of dysbacteriosis, lameness and/or paresis in livestock in its early life stages, preferably treatment and prevention of dysbacteriosis, lameness and paresis caused by infections with E. cecorum in livestock in its early life stages and for the prevention of damaged footpads from high pH-value livestock excrements.
